# EUROPEAN PATENT APPLICATION

(11) **EP 1 724 188 A1**
(43) Date of publication of application: **22.11.2006**
(21) Application number: 05010766.3
(22) Date of filing: 18.05.2005
(51) Int. Cl.: B62K 15/00

(54) **Collapsible bicycle**

(71) Applicant: Wu, Ho Hsin, Sindian City Taipei Hsien (TW)
(72) Inventor: Wu, Ho Hsin, Sindian City Taipei Hsien (TW)
(74) Representative: Glawe, Delfs, Moll

(57) **Abstract**

A collapsible bicycle has a frame assembly (10) and a locking device (51). The frame assembly (10) has a head tube (11), a sliding bracket (50), a downtube (12) and a seat tube (13). The slidable bracket (50) is mounted around the head tube (11). The downtube (12) is connected pivotally to the slidable bracket (50), and the seat tube (13) is connected pivotally to the head tube (11) and the downtube (12). The locking device (51) connects to the slidable bracket (50) and selectively holds the slidable bracket (50) in position. The slidable bracket (50) moves along the head tube (11) to align the downtube (12) and the seat tube (13) with the head tube (11). Then the locking device (51) holds the slidable bracket (50) in position to hold the collapsible bicycle in a collapsed state.

## Description

### BACKGROUND OF THE INVENTION

### 1. Field of the Invention

The present invention relates to a bicycle, especially to a collapsible bicycle.

### 2. Description of the Prior Arts

People who live in big cities can use public transportation such as buses and subways. However, public transportation operates on routes with specific designated stops, which often requires that people who use public transportation walk considerable distances to their destinations. To reduce the time required to walk to a specific destination, some people ride bicycles to cover short distances. However, ordinary bicycles are too large to easily carry on public transportation. Therefore, conventional collapsible bicycles are more commonly taken on public transportation because conventional collapsed bicycles are much smaller. However, to collapsing the conventional collapsible bicycle is complicated and requires time. People who take the public transportation, especially commuters, usually have no time to waste on collapsing conventional collapsible bicycles. After collapsing the conventional collapsible bicycles, the conventional collapsed bicycles are shorter and cannot be rolled easily.

To overcome the shortcomings, the present invention provides a simple and convenient collapsible bicycle to mitigate or obviate the aforementioned problems.

### SUMMARY OF THE INVENTION

The main objective of the present invention is to provide a simple and convenient collapsible bicycle. The collapsible bicycle has a frame assembly and a locking device. The frame assembly has a head tube, a sliding bracket, a downtube and a seat tube. The slidable bracket is mounted around the head tube. The downtube is connected pivotally to the slidable bracket, and the seat tube is connected pivotally to the head tube and the downtube. The locking device connects to the slidable bracket and selectively holds the slidable bracket in position. The slidable bracket moves along the head tube to align the downtube and the seat tube with the head tube. Then the locking device holds the slidable bracket in position to hold the collapsible bicycle in a collapsed state.

Other objectives, advantages and novel features of the invention will become more apparent from the following detailed description when taken in conjunction with the accompanying drawings.

### BRIEF DESCRIPTION OF THE DRAWINGS

Fig. 1 is a perspective view of a collapsible bicycle in accordance with the present invention;
Fig. 2 is an enlarged perspective view of a crankset of the collapsible bicycle in Fig. 1;
Fig. 3 is an enlarged perspective view of a slidable bracket and a locking device of the collapsible bicycle in Fig. 1;
Fig. 4 is a perspective view of the collapsible bicycle in Fig. 1 in a collapsed state; and
Fig. 5 is an enlarged operational front view in partial section of the slidable bracket and the locking device of the collapsible bicycle in Fig. 2.

### DETAILED DESCRIPTION OF THE PREFERRED EMBODIMENTS

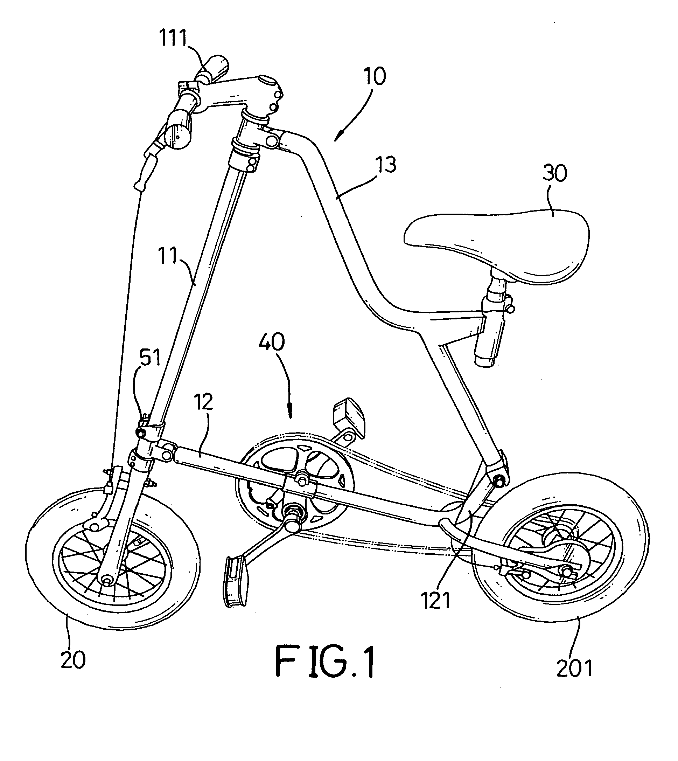

With reference to Fig. 1, a collapsible bicycle in accordance with the present invention comprises a frame assembly 10, a handle bar 111, a front wheel assembly 20, a rear wheel assembly 201, a seat assembly 30, a crankset 40 and a locking device 51.

The frame assembly 10 comprises a head tube 11, a downtube 12 and a seat tube 13.

The head tube 11 has a top end, a bottom end and a slidable bracket 50. The slidable bracket 50 is mounted slidably around the head tube 11.

The downtube 12 is connected pivotally to the head tube 11 and has a front end and a rear end 121. The front end is connected pivotally to the slidable bracket 50.

The seat tube 13 is connected pivotally to the head tube 11 and the downtube 12 and has a top end and a bottom end. The top end of the seat tube 13 is connected pivotally to the head tube 11 near the top end of the head tube 11. The bottom end of the seat tube 13 is connected pivotally to the rear end 121 of the downtube 12.

The handlebar 111 is mounted rotatably in the top end of the head tube 11.

The front wheel assembly 20 is mounted rotatably in the bottom end of the head tube 11.

The rear wheel assembly 201 connects to the rear end 121 of the downtube 12.

The seat assembly 30 connects to the seat tube 13.

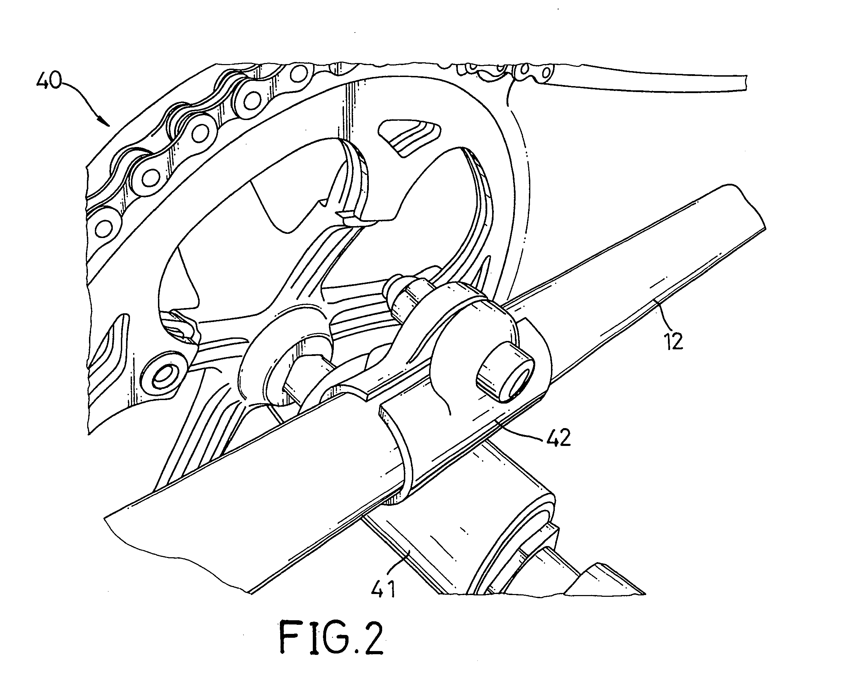

With further reference to Fig. 2, the crankset 40 connects to the downtube 12 and the rear wheel assembly 201, may connect slidably to the downtube 12 and may have a chain wheel, a clamp 42, a crank axle 41 and a chain. The clamp 42 is mounted slidably around the downtube 12. The crank axle 41 is connected to the chain wheel and is attached to the clamp 42. The chain connects to the chain wheel and the rear wheel assembly 201. Sliding the clamp 42 on the downtube 12 tightens or loosens the chain.

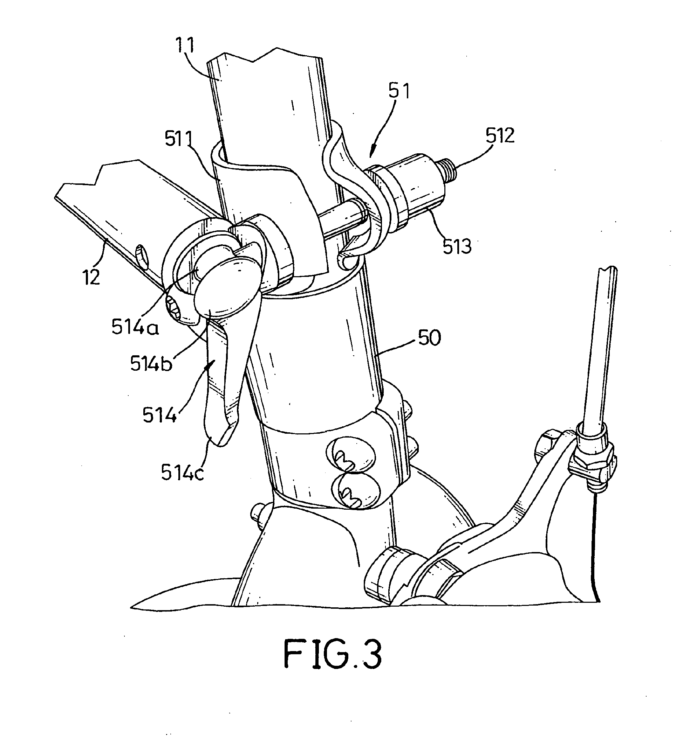

With further reference to Fig. 3, the locking device 51 connects to the slidable bracket 50 around the head tube 11, selectively holds the slidable bracket 50 in position and may comprise a clamp 511, a pin 512, a nut 513 and a lever 514.

The clamp 511 is resilient, connects to the slidable bracket 50, is mounted slidably around the head tube 11 and has an inner surface, two ends and two through holes. The inner surface is mounted around and selectively slides on the head tube 11. The two through holes are formed through the clamp 511 and are opposite to each other respectively near the two ends of the clamp 511.

The pin 512 is mounted slidably through the two through holes in the clamp 511 and has a threaded head and a proximal end.

The nut 513 screws into the threaded head of the pin 512.

The lever 514 is mounted pivotally on the proximal end of the pin 512 to compress the clamp 511 and has a pivot end 514a and a tab 514c. The pivot end 514a faces the clamp 511, is mounted pivotally on the distal end of the pin 512 and has an eccentric head with two enlarged lobes 514b. The tab 514c is formed opposite to the pivot end 514a and is pivoted selectively upward or downward. When the tab 514c is pivoted downward, the enlarged lobes 514b release the clamp 511. When the tab 514c is pushed upward, the enlarged lobes 514b press tightly against and compress the clamp 511.

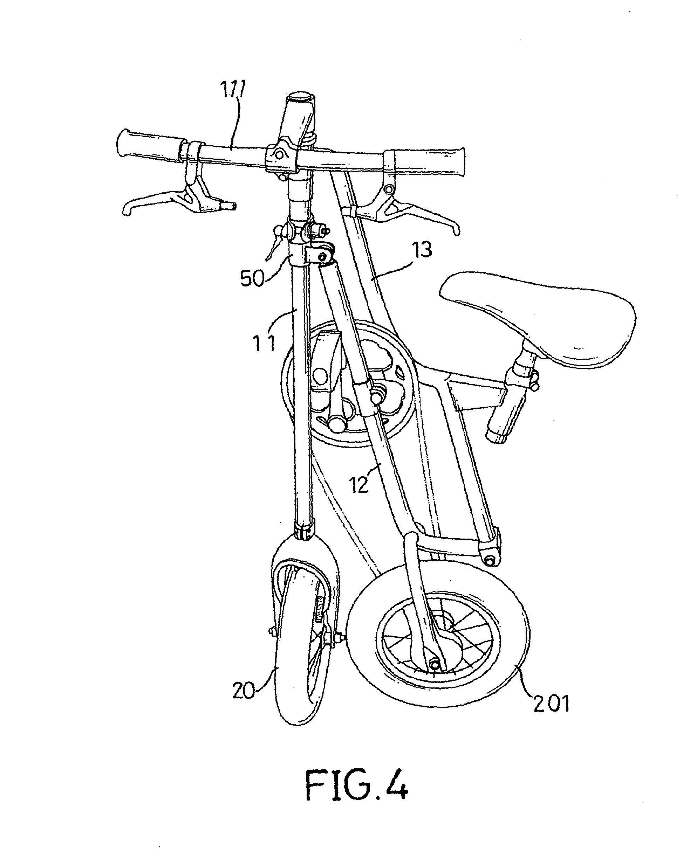

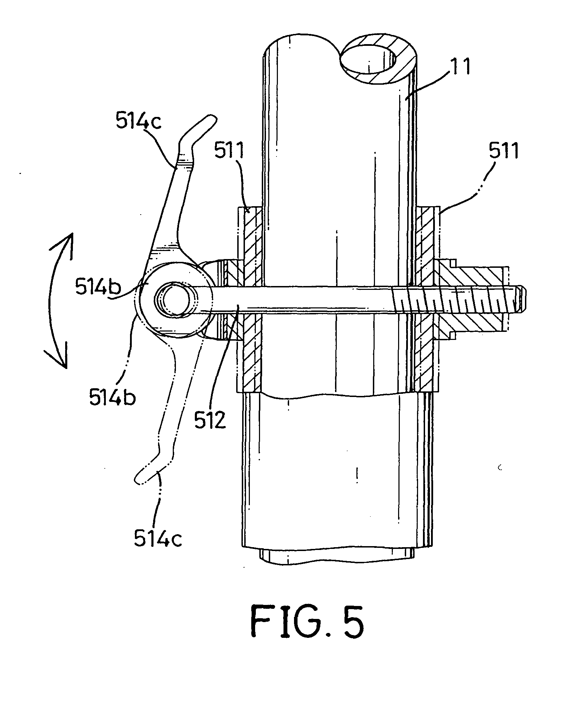

With further reference to Figs. 4 and 5, the front end of the downtube 12 can be moved upward with the slidable bracket 50 moving along the head tube 11 when the tab 514c is pivoted downward. The slidable bracket 50 moves upward to align the downtube 12 and the seat tube 13 with the head tube 11. The handlebar 111 is rotated to align the front wheel with the rear wheel. Then the tab 514c is pivoted upward to press the enlarged lobes 514b tightly against the clamp 511. When the enlarged lobes 514b press tightly against the clamp 511, the slidable bracket 50 is held in position. Therefore, the collapsible bicycle is collapsed and is held in a collapsed state.

The collapsible bicycle as described has numerous advantages. The collapsible bicycle is collapsed easily by moving the front end of the downtube 12 up along the head tube 11, rotating the handlebar 111 and pivoting the tab 514c upward. After collapsing the collapsible bicycle, the collapsible bicycle is still tall enough to move easily.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A collapsible bicycle comprising
a frame assembly comprising
a head tube having
a top end;
a bottom end; and
a slidable bracket mounted slidably around the head tube;
a downtube connected pivotally to the head tube and having
a front end connected pivotally to the slidable bracket; and
a rear end; and
a seat tube connected pivotally to the head tube and the downtube
and having
a top end connected pivotally to the head tube near the top end of the head tube; and
a bottom end connected pivotally to the rear end of the downtube;
a handlebar mounted rotatably in the top end of the head tube;
a front wheel assembly mounted rotatably in the bottom end of the head tube;
a rear wheel assembly connecting to the rear end of the downtube;
a seat assembly connecting to the seat tube;
a crankset mounted on the downtube and the rear wheel assembly; and
a locking device connecting to the slidable bracket around the head tube to selectively hold the slidable bracket in position.

2. The collapsible bicycle as claimed in claim 1, wherein
the locking device further comprises
a clamp being resilient, connecting to the slidable bracket, mounted slidably around the head tube and having
an inner surface mounted around and selectively sliding on the head tube;
two ends; and
two through holes formed through the clamp, being opposite to each other respectively near the two ends of the clamp;
a pin mounted slidably through the two through holes in clamp and having
a threaded head; and
a proximal end;
a nut screwing onto the threaded head of the pin; and
a lever mounted pivotally on the proximal end of the pin to compress the clamp and having
a pivot end facing the clamp, mounted pivotally on the proximal end of the pin and having an eccentric head with two enlarged lobes; and
a tab formed opposite to the pivot end and pivoted selectively upward or downward.

3. The collapsible bicycle as claimed in claim 1, wherein
the crankset connects slidably to the downtube and has
a chain wheel;
a clamp mounted slidably around the downtube;
a crank axle connecting to the chain wheel and attached to the clamp; and
a chain connecting to the chain wheel and the rear wheel assembly.

4. The collapsible bicycle as claimed in claim 2, wherein
the crankset connects slidably to the downtube and has
a chain wheel;
a clamp mounted slidably around the downtube; and
a crank axle connecting to the chain wheel and attached to the clamp; and
a chain connecting to the chain wheel and the rear wheel assembly.
